Europäisches Patentamt

European Patent Office

Office européen des brevets

(19)

(11) Veröffentlichungsnummer: **0 076 916**
A1

# (12) EUROPÄISCHE PATENTANMELDUNG

(21) Anmeldenummer: **82107900.1**

(22) Anmeldetag: **27.08.82**

(51) Int. Cl.³: **C 04 B  43/12, E 04 B  1/78**

(30) Priorität: **11.09.81 DE 3136091**

(43) Veröffentlichungstag der Anmeldung: **20.04.83**
**Patentblatt 83/16**

(84) Benannte Vertragsstaaten: **AT BE CH DE FR GB IT LI LU NL SE**

(71) Anmelder: **Mavropoulos, Theodoros, Oinois 21 Street, Katerini (GR)**
Anmelder: **Kioroglou, Nikolaos, Brücke 32, D-4040 Neuss (DE)**
Anmelder: **Angelidis, Petros, Hafenstrasse 54, D-4040 Neuss (DE)**

(72) Erfinder: **Mavropoulos, Theodoros, Oinois 21 Street, Katerini (GR)**
Erfinder: **Kioroglou, Nikolaos, Brücke 32, D-4040 Neuss (DE)**
Erfinder: **Angelidis, Petros, Hafenstrasse 54, D-4040 Neuss (DE)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

(54) Verfahren zur Herstellung einer wärmedämmenden Masse, Verwendung dieser Masse für Bauelemente und Bauelement, hergestellt unter Verwendung dieser Masse.

(57) Insbesondere zur Herstellung eines Bauelementes wird ein pflanzliches Material (16) in ein Bad aus Wasser und Bindemittel einer bestimmten Zusammensetzung getaucht und so mit dem Bindemittel (18) beschichtet. Anschließend wird das beschichtete Material aus dem Bad entnommen und getrocknet. Das so erhaltene Zwischenprodukt wird mit Wasser und weiterem Bindemittel zu einer fließfähigen Masse verarbeitet und dann in eine bestimmte Form gepreßt. Der so erhaltene Gegenstand hat eine hohe Festigkeit, eine geringe Wärmeleitfähigkeit, eine hohe Resistenz gegen Hitze, Kälte und Feuchtigkeit und ist schwer entflammbar.

0076916

37 341 p/we

1. DIPL. ING. THEODOROUS MAVROPOULOUS, OINOIS 21,
   KATHERINI / GRIECHENLAND

2. NIKOLAOS KIOROGLOU, BRÜCKE 32, NEUSS / BUNDES-
   REPUBLIK DEUTSCHLAND

3. PETROS ANGELIDIS, HAFENSTRASSE 54, NEUSS /
   BUNDESREPUBLIK DEUTSCHLAND

<u>Verfahren zur Herstellung einer wärmedämmenden Masse,</u>
<u>Verwendung dieser Masse für Bauelemente und Bauelement,</u>
<u>hergestellt unter Verwendung dieser Masse</u>

Die Erfindung bezieht sich auf ein Verfahren zum Herstellen einer wärmedämmenden Masse, Verwendung dieser
Masse für Bauelemente und ein Bauelement, hergestellt
unter Verwendung dieser Masse.

In den letzten Jahren sind erhebliche Bestrebungen im
Gange, Energie einzusparen, ohne jedoch ganz allgemein
die bisher erzielten Vorzüge einschränken zu wollen. So ist man
insbesondere im Baugewerbe daran interessiert, Baumaterialien zu verwenden, die ausgezeichnete wärmedämmende Eigenschaften haben, ohne dass jedoch gegebenenfalls die Festigkeit vermindert werden muss. Gegebenenfalls sollen derartige wärmedämmende Materialien auch eine ausreichende Elastizität sowie Schutz gegen Hitze, Kälte, Feuchtigkeit und Schall gewährleisten.

Bisher wurden eine ganze Menge von Materialien auf den Markt gebracht, die in einem nicht unerheblichen Masse diesen Anforderungen genügen. Diejenigen Materialien, die jedoch relativ hohe wärmedämmende Eigenschaften haben, leiden unter einer erheblich geringeren Festigkeit, so dass sie sich insbesondere nicht als solche Bauelemente eignen, die insbesondere die Statik eines Gebäudes bestimmen oder auf andere Weise besonders hohen Kräften ausgesetzt sind.

Daher besteht die Aufgabe der Erfindung darin, eine Masse herzustellen, die einerseits eine gute wärmedämmende Eigenschaft, andererseits aber auch eine hohe Festigkeit hat und unempfindlich gegenüber Hitze, Kälte und Feuchtigkeit ist.

Diese Aufgabe wird erfindungsgemäss dadurch gelöst, dass ein Pflanzenmaterial beliebiger Art in ein Bad aus Wasser und Bindemittel getaucht und so mit dem Bindemittel beschichtet und anschliessend das Material aus dem Bad entnommen und getrocknet wird.

Da das Pflanzenmaterial in ein bindemittelhaltiges Wasserbad getaucht wird, kann das Bindemittel die gesamte Oberfläche des Pflanzenmaterials erreichen und sich dort

- 3 -

absetzen, was eine nahezu vollständige Beschichtung des Pflanzenmaterials mit dem Bindemittel hervorruft. Wenn das Bindemittel aus dem Bad entnommen und getrocknet ist, stellt dieses ein vorzügliches Zwischenprodukt dar, welches hinsichtlich der Lösung der genannten Aufgabe hervorragende Eigenschaften hat. Eine besonders gute Beschichtung des Pflanzenmaterials mit dem Bindemittel ergibt sich dann, wenn das Pflanzenmaterial während des Tauchens mit der Badsubstanz mechanisch vermischt wird.

Für einen einwandfreien Beschichtungsvorgang ist es darüber hinaus notwendig, das Pflanzenmaterial lose auf und in das Bad zu schütten. Dabei sollte das Pflanzenmaterial sich in einem welken, halbtrockenen Zustand befinden, in dem das Pflanzenmaterial, d.h. die Pflanzenzelle, möglicherweise gerade noch lebt.

Zweckmässigerweise dauert der Tauchvorgang sowie das anschliessende Trocknen ca. 2 Stunden.

Besondere Erfolge werden erzielt, wenn die Badmenge ca. 20 bis 30 Vol.% des lose geschütteten Pflanzenmaterials ausmacht und die Badmenge aus 80 bis 90 Vol.% Wasser und 20 bis 10 Vol.% Bindemittel besteht. Innerhalb dieses Bereiches ist es besonders vorteilhaft, wenn die Badmenge 25 Vol.% des Pflanzenmaterials und das Badwasser 85 Vol.% und das Badbindemittel 15 Vol.% der Badmenge ausmacht.

Das so hergestellte Zwischenprodukt kann dann unter Zugabe von Wasser und weiterem Bindemittel in eine fliessfähige Masse umgewandelt und zu einer festen Masse komprimiert werden.

Diese Masse hat überraschend gute Materialeigenschaften, wie hohe Festigkeit, hohe Wärmedämmung (d.h. geringe Wärmeleitfähigkeit), Widerstandsfähigkeit gegen Hitze, Kälte und Feuchtigkeit, gute schallschluckende Eigenschaften und ist äusserst schwer entflammbar.

Als Pflanzenmaterial eignet sich insbesondere Stroh von Getreide, wie Weizen, Roggen, Gerste, usw., und Mais oder Rais, aber auch Blätter, zerkleinertes Holz und dergleichen.

Als Bindemittel eignen sich beispielsweise Zement und Teer und als Füllmaterial, für den Fall, dass der fliessfähigen Masse ein Füllmaterial zugegeben wird, Sand, Bims oder dergleichen.

Das die genannten Eigenschaften aufweisende Material kann in besonders günstiger Weise für Bauelemente aller Art, wie Bausteine, Platten, Ziegel, Blöcke, Rohrisolierungen oder dergleichen, verwendet werden. Dabei besteht das Bauelement aus dem mit Bindemittel vorbeschichteten Zwischenprodukt auf Pflanzenbasis und einem weiteren Bindemittel, welche Materialien im fliessfähigen Zustand in die gewünschte Form gepresst worden sind. Dabei kann zur Beeinflussung der Eigenschaften nach Wunsch des Konsumenten ein Füllmaterial der genannten Art zugegeben werden.

Weitere Einzelheiten der Erfindung ergeben sich aus der nachfolgenden Beschreibung der in den rein schematischen Zeichnungen dargestellten Ausführungsbeispiele. Es zeigt:

Fig. 1        eine perspektivische Ansicht eines aus der erfindungsgemässen Masse hergestellten Bausteins,

Fig. 2        eine Schnittansicht entlang der Linie II-II in Fig. 1,

Fig. 3a+b        geschnittene perspektivische Ansichten von in der erfindungsgemässen Masse befindlichen Strohlängenabschnitten, in Fig. 3b in vollzylindrischer, geschlossener und in Fig. 3a in halbzylindrischer, aufgebrochener Form und zwar in bereits mit Bindemittel beschichtetem Zustand,

Fig. 4        einen Baustein entsprechend Fig. 1 mit einer eine Klinkerstruktur aufweisenden Auflage, und

Fig. 5        eine aus der erfindungsgemässen Masse hergestellte Bauplatte mit einer gegebenenfalls als Putzschicht verwendbaren Auflage.

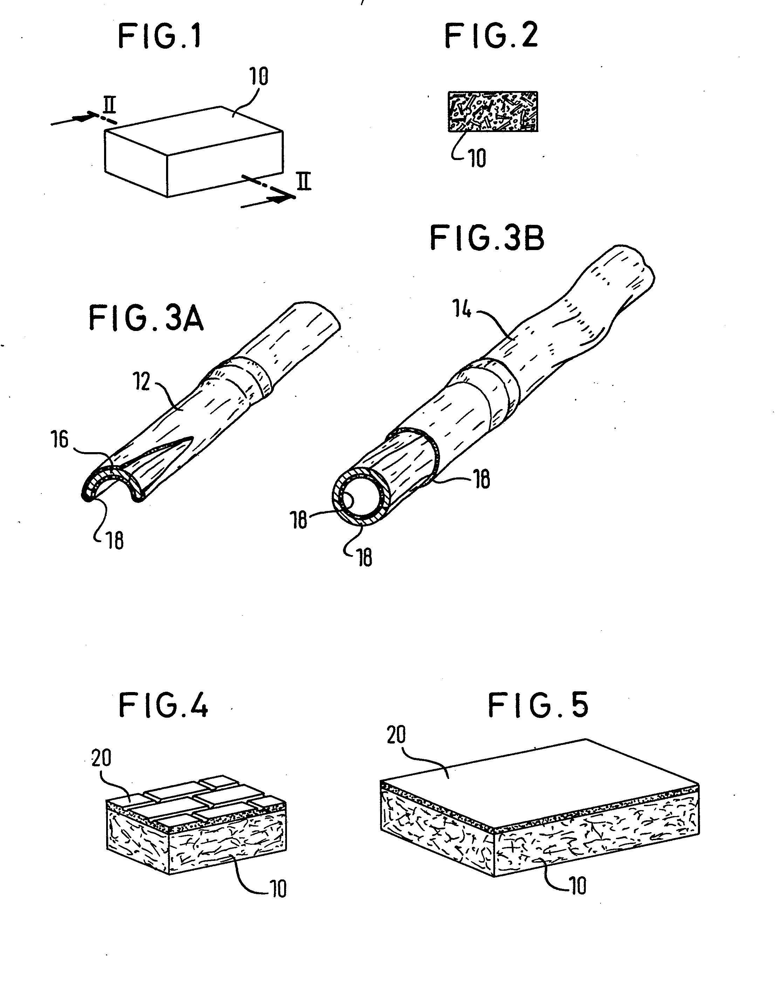

Die Herstellung eines Bausteines 10, entsprechend Fig. 1 geht folgendermassen vonstatten. Ein Pflanzenmaterial, beispielsweise Stroh von Getreide, wie Weizen, Hafer, Gerste, Mais oder Reis und dergleichen (rein beispielsweise, denn es können auch Blätter, geraspeltes Holz oder andere Pflanzenmaterialien verwendet werden), wird, bevor es in eine bestimmte Form, beispielsweise eines Bausteines, gebracht wird, einer bestimmten Vorbehandlung unterzogen. Diese Vorbehandlung besteht darin, dass dieses Stroh im halbgetrockneten, jedoch noch nicht vollständig abgestorbenen Zustand, in dem es ohne weiteres Risse haben kann oder aber in Teile zerbrochen ist, mit einem Bindemittel dadurch in Berührung gebracht, dass dieses Material in ein Wasserbad getaucht wird, welches Bindemittel einer bestimmten Menge enthält. Während dieses Tauchvorganges, welcher durch mechanisches Mischen unterstützt werden kann, gelangt das Bindemittel an alle Oberflächenbereiche des Pflanzenmaterials und setzt sich dort ab. Dies wird dadurch unterstützt, dass das Bindemittel sich in einer grösseren Wassermenge befindet, durch die das Eindringen in Hohlräume und Zwischenräume begünstigt wird. Dieser Tauchvorgang erfolgt solange, bis das Pflanzenmaterial über seine gesamte Oberfläche mit einem Bindemittel, wie Zement oder Teer, beschichtet ist. Dieser Zustand ist für ein Stück eines Teiles eines Strohhalmes 12 in Fig. 3a und für ein Stück eines noch geschlossenen Strohhalmes 14 in Fig. 3b dargestellt. Aus der entsprechenden Querschnittsfläche ist das Pflanzenmaterial 16 und das Bindemittel 18 als Beschichtung erkennbar. Dabei ist in Fig. 3b sowohl die innere als auch die äussere Umfangsfläche des Strohhalmes mit der Bindemittelschicht versehen.

Das Pflanzenmaterial wird in dem halbtrockenen Zustand lose in das Bad geschüttet und in nicht-zusammengepresstem Zustand aus dem Bad entnommen und getrocknet.

Zu einem späteren gewünschten Zeitpunkt kann dann dieses Zwischenprodukt zur Herstellung von beispielsweise Bauelementen verwendet werden, indem diesem Zwischenprodukt Wasser und erneut Bindemittel zugegeben wird, um so ein fliessfähiges Material herzustellen. Dieses fliessfähige Material wird dann gegebenenfalls unter Hinzugabe von Füllmaterial in eine bestimmte Form gepresst, beispielsweise in die Form des Bausteines 10. Ein derartiger Baustein hat bei ausgezeichneten wärmedämmenden Eigenschaften eine hohe Festigkeit, ist widerstandsfähig gegen Hitze, Kälte und Feuchtigkeit und ist darüber hinaus ausserordentlich schwer entflammbar, da während des Badtauchens das Bindemittel nahezu die gesamte Oberfläche des Pflanzenmaterials bedecken kann. Beim Verpressen zum Endprodukt kann zusätzlich zu dem Pressdruck eine Vibrationswirkung erzeugt werden, um die gewünschte Verdichtung herzustellen. Dabei ist allerdings zu berücksichtigen, dass eine zu hohe Verdichtung gegebenenfalls die dem Material eigenen wärmedämmenden Eigenschaften wieder aufhebt, insbesondere dann, wenn eine zu grosse Menge an Bindemittel verwendet wird. So beeinflusst eine grössere Menge an Bindemittel und Füllmaterial das Bauelement hinsichtlich einer höheren Festigkeit. Die Verwendung von weniger Füllmaterial und weniger Bindemittel führt dagegen zu besseren wärmedämmenden Eigenschaften. Je nach Wunsch des Konsumenten können daher die Eigenschaften des Bausteins bzw. des verwendeten Materials in der einen oder anderen Richtung beeinflusst werden. Grundsätzlich aber werden in beiden Richtungen gute Ergebnisse durch die Vorbehandlung des Pflanzenmaterials zur Erstellung des Zwischenproduktes erzielt.

Entsprechend Fig. 4 kann das Bauelement 10 mit einer Auflage 20 versehen sein, die entsprechend strukturiert ist. Beispielsweise kann die Strukturierung gemäss Fig. 4 einen Klinkereffekt hervorrufen. Die Strukturierung bei der Auflage 20 gemäss Fig. 5 kann so sein, dass diese Auflage das Aussehen einer Innenverputzung hat.

Diese Auflage 20 kann in der Pressform für den Baustein aufgebracht werden, indem die Aufbringung während des Zusammenpressens der fliessfähigen Masse zu dem Baustein erfolgt. Dabei kann auch zugleich die besondere Strukturierung innerhalb der Auflage vorgenommen werden.

Beispiel

Eine bestimmte Menge eines Pflanzenmaterials als Isoliermaterial wird im lockeren Zustand in ein aus Wasser und Bindemittel bestehendes Tauchbad getaucht, welches 25 % des zugegebenen Pflanzenmaterials ausmacht. Dabei macht das Badwasser 85 Vol.% und das Bindemittel 15 Vol.% der Badmenge aus.

Unter diesen Bedingungen wurde das pflanzliche Material lose in das Bad geschüttet und in dieses getaucht. Danach erfolgte eine Vermischung des pflanzlichen Materials mit dem Wasser und dem Bindemittel, welches in diesem Falle grauer Zement war. Das Mischen dauerte ca. 2 Stunden, wonach das lose und mit dem Zement beschichtete Pflanzenmaterial dem Bad entnommen und ca. mindestens 2 Stunden getrocknet wurde.

Das so getrocknete Material wurde dann erneut mit Wasser und einem weiteren Bindemittel sowie einem Füllmaterial zu einer fliessfähigen Masse verarbeitet. Diese fliessfähige Masse wurde dann in einer besonderen Vorrichtung zu einem Baustein gepresst.

Dieser Baustein hatte folgende Eigenschaften:

Hohe Festigkeit, geringe Wärmeleitfähigkeit, gute Elastizität, Widerstandsfähigkeit gegen Hitze, Kälte, Feuchtigkeit und gute Schallschluckeigenschaften.

PATENTANSPRÜCHE

1. Verfahren zum Herstellen einer wärmedämmenden Masse, dadurch g e k e n n z e i c h n e t , dass

   (a)      ein Material auf pflanzlicher Basis in ein Bad aus Wasser und Bindemittel getaucht und so mit dem Bindemittel beschichtet wird, und

   (b)      anschliessend das Material aus dem Bad entnommen und getrocknet wird.

2. Verfahren nach Anspruch 1, dadurch g e k e n n - z e i c h n e t , dass das Material während des Tauchens mit der Badsubstanz mechanisch vermischt wird.

3. Verfahren nach den Ansprüchen 1 und/oder 2, dadurch g e k e n n z e i c h n e t , dass das Material im halbtrockenen Zustand, d.h. mit noch lebenden Pflanzenzellen, in das Bad getaucht wird.

4. Verfahren nach mindestens einem der Ansprüche 1 bis 3, dadurch g e k e n n z e i c h n e t , dass das Material lose auf und in das Bad geschüttet wird.

5. Verfahren nach Anspruch 1, dadurch g e k e n n - z e i c h n e t , dass das Material für einen Zeitraum von ca. 2 Stunden getaucht wird.

6. Verfahren nach Anspruch 1, dadurch g e k e n n - z e i c h n e t , dass das Material für einen Zeitraum von mindestens ca. 2 Stunden getrocknet wird.

7. Verfahren nach mindestens einem der Ansprüche 1 bis 6, dadurch g e k e n n z e i c h n e t , dass die Badmenge ca. 20 bis 30 Vol.% des lose geschütteten Pflanzenmaterials ausmacht.

8. Verfahren nach Anspruch 7, dadurch g e k e n n - z e i c h n e t , dass die Badmenge aus 80 bis 90 Vol.% Wasser und 20 bis 10 Vol.% Bindemittel besteht.

9. Verfahren nach den Ansprüchen 7 und 8, dadurch g e k e n n z e i c h n e t , dass die Badmenge 25 Vol.% des Pflanzenmaterials und das Badwasser 85 Vol.% und das Badbindemittel 15 Vol.% der Badmenge ausmacht.

10. Verfahren nach Anspruch 1 und mindestens einem der Ansprüche 2 bis 9, dadurch g e k e n n - z e i c h n e t , dass der erhaltenen Masse Wasser und weiteres Bindemittel zur Herstellung einer fliessfähigen Masse zugesetzt und diese fliessfähige Masse komprimiert wird.

11. Verfahren nach Anspruch 10, dadurch g e k e n n - z e i c h n e t , dass bei der Herstellung der fliessfähigen Masse ein Füllmaterial zugegeben wird.

12. Verfahren nach mindestens einem der Ansprüche 1 bis 11, dadurch g e k e n n z e i c h n e t , dass als Pflanzenmaterial Stroh von Getreide, wie Weizen, Rogen, Gerste, Mais und Reis oder dergleichen, Blätter, zerkleinertes Holz usw. verwendet wird.

13. Verfahren nach mindestens einem der Ansprüche 1 bis 12, dadurch g e k e n n z e i c h n e t , dass als Bindemittel Zement, Teer oder dergleichen verwendet wird.

14. Verfahren nach Anspruch 11, dadurch g e k e n n - z e i c h n e t , dass als Füllmaterial Sand, Bims oder dergleichen verwendet wird.

15. Verwendung der Masse gemäss den Ansprüchen 1 bis 14 für Bauelemente.

16. Bauelement, wie ein Baustein, eine Platte, ein Ziegel, ein Block, eine Rohrisolierung oder dergleichen, bestehend aus einem Grundmaterial und einem Bindemittel, dadurch g e k e n n z e i c h - n e t , dass das Grundmaterial (16) als Pflanzenmaterial nahezu insgesamt mit Bindemittel (18) vorbeschichtet und mit einem weiteren Bindemittel in eine Form (10) gepresst ist.

17. Bauelement nach Anspruch 16, dadurch g e k e n n - z e i c h n e t , dass zwischen dem Grundmaterial ein Füllmaterial eingebettet ist.

18. Bauelement nach Anspruch 16, dadurch g e k e n n - z e i c h n e t , dass als Pflanzenmaterial Stroh von Getreide, wie Weizen, Roggen, Gerste, Mais und Reis oder dergleichen, Blätter, zerkleinertes Holz usw. verwendet wird.

19. Bauelement nach Anspruch 15, dadurch g e k e n n - z e i c h n e t , dass als Bindemittel Zement, Teer oder dergleichen verwendet wird.

20. Bauelement nach Anspruch 16, dadurch g e k e n n - z e i c h n e t , dass als Füllmaterial Sand, Bims oder dergleichen verwendet wird.

21. Bauelement nach Anspruch 16, dadurch  g e k e n n -
z e i c h n e t ,  dass mindestens an einer Aussenseite eine Auflage anderen Materials aufgebracht ist,
die an der Aussenseite mit einer Strukturierung
versehen ist.

22. Bauelement nach Anspruch 21, dadurch  g e k e n n -
z e i c h n e t ,  dass die Strukturierung eime
Klinkerstrukturierung ist.

0076916

1/1

FIG.1

FIG.2

10

FIG.3B

FIG.3A

12

16

14

18

18

18

18

FIG.4

FIG.5

20

20

10

10

Europäisches
Patentamt

**EUROPÄISCHER RECHERCHENBERICHT**

0076916

Nummer der Anmeldung

EP 82 10 7900.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 1 752 561 (R. KARG et al.)<br><br>* ganzes Dokument *<br><br>--- | 1,10, 12,13, 15,16, 18,19, 21 |
| A | DD - A - 104 499 (LICENCIA TALÁLMÁNYOKAT ERTEKESITÖ VÁLLALAT)<br><br>* Ansprüche 1, 15 bis 20; Beispiele 1, 14 *<br><br>--- | 1,2, 12-14, 16, 18-21 |
| A | Soviet Inventions Illustrated<br>Week B40, 14.November 1979<br>Sections L02, A93, F09<br>& SU - A - 642 278<br><br>---- | 3,12, 13 |

**KLASSIFIKATION DER ANMELDUNG (Int. Cl.³)**

C 04 B   43/12

E 04 B   1/78

**RECHERCHIERTE SACHGEBIETE (Int. Cl.³)**

C 04 B   43/00

E 04 B   1/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie,   übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 02-12-1982 | STROUD |

EPA form 1503.1   06.78